# FASCICULE DE BREVET EUROPEEN

(11) **EP 2 877 526 B1**
(45) Date de publication et mention de la délivrance du brevet: **18.12.2019**
(21) Numéro de dépôt: 13740292.1
(22) Date de dépôt: 24.07.2013
(51) Int. Cl.: C08K 5/29

(54) **COMPOSITION DE CAOUTCHOUC COMPRENANT UNE RESINE ÉPOXYDE ET UN DURCISSEUR POLY-IMINE**
KAUTSCHUKZUSAMMENSETZUNG MIT EINEM EPOXIDHARZ UND EINEM POLYIMINHÄRTUNGSMITTEL
RUBBER COMPOSITION COMPRISING AN EPOXY RESIN AND A POLYIMINE HARDENER

(30) Priorité: 25.07.2012 FR 1257196
(43) Date de publication de la demande: 03.06.2015
(73) Titulaire: Compagnie Générale des Etablissements Michelin, 63000 Clermont-Ferrand (FR)
(72) Inventeur: VEYLAND, Anne, F-63040 Clermont-Ferrand Cedex 9 (FR); MOUGIN, Catherine, F-63040 Clermont-Ferrand Cedex 9 (FR)
(74) Mandataire: Louret, Sylvain
(86) Numéro de dépôt international: PCT/EP2013/065634
(87) Numéro de publication internationale: WO 2014/016346

(56) Documents cités:
- WO-A2-2011/003981
- FR-A1- 2 951 182
- JP-A- 2006 063 206
- DATABASE WPI Week 200864 26 juin 2008 (2008-06-26) Thomson Scientific, London, GB; AN 2008-K75593 XP002692365, & JP 2008 144044 A (YOKOHAMA RUBBER CO LTD) 26 juin 2008 (2008-06-26)

## Description

La présente invention est relative aux compositions de caoutchouc destinées notamment à la fabrication de pneumatiques ou de produits semi-finis pour pneumatiques, en particulier des compositions de caoutchouc présentant une rigidité élevée.

Il est connu d'utiliser dans certaines parties des pneumatiques, des compositions de caoutchouc présentant une forte rigidité lors de faibles déformations du pneumatique (cf WO 02/10269). La résistance aux faibles déformations est une des propriétés que doit présenter un pneumatique pour répondre aux sollicitations auxquelles il est soumis.

Cette rigidification peut être obtenue en augmentant le taux de charge renforçante ou en incorporant certaines résines renforçantes dans les compositions de caoutchouc constitutives des parties du pneumatique.

Toutefois, de manière connue, l'augmentation de la rigidité d'une composition de caoutchouc en augmentant le taux de charge peut pénaliser les propriétés d'hystérèse et donc de résistance au roulement des pneumatiques. Or, on cherche toujours à baisser la résistance au roulement des pneumatiques pour diminuer la consommation en carburant à des fins économiques et environnementales.

Classiquement cette augmentation de la rigidité est obtenue en incorporant des résines renforçantes à base d'un système accepteur/donneur de méthylène. Les termes « accepteur de méthylène » et « donneur de méthylène » sont bien connus de l'homme du métier et largement utilisés pour désigner des composés aptes à réagir ensemble pour générer par condensation une résine renforçante tridimensionnelle qui vient se superposer, s'interpénétrer avec le réseau charge renforçante/élastomère d'une part, avec le réseau élastomère/soufre d'autre part (si l'agent de réticulation est le soufre). A l'accepteur de méthylène précédemment décrit est associé un agent durcisseur, apte à le réticuler ou durcir, encore appelé communément "donneur de méthylène". La réticulation de la résine est alors provoquée lors de la cuisson de la matrice de caoutchouc, par formation de ponts méthylènes (-CH₂-) entre les carbones en positions ortho et/ou para des noyaux phénoliques de la résine et le donneur de méthylène et créant ainsi un réseau de résine tridimensionnel.

Les donneurs de méthylène classiquement utilisés dans les compositions de caoutchouc pour pneumatiques sont l'hexa-méthylènetétramine (en abrégé HMT), ou l'hexaméthoxyméthylmélamine (en abrégé HMMM ou H3M), ou l'hexaéthoxyméthylmélamine.

Toutefois, il est souhaitable de trouver des alternatives aux résines renforçantes classiques.

Précédemment, les Demanderesses ont découvert lors de leurs recherches que les résines renforçantes usuelles peuvent avantageusement être remplacées par une résine époxyde avec une diamine comme durcisseur. L'utilisation de ce couple de réactifs résine époxyde et diamine permet d'obtenir des compositions de caoutchouc présentant une rigidité supérieure à basse déformation par rapport aux compositions de caoutchouc conventionnelles, sans dégrader de manière notable l'hystérèse, comme décrit dans le document FR 2951182.

Poursuivant leurs recherches, les Demanderesses ont à présent trouvé que le durcisseur diamine de la résine époxyde peut avantageusement être remplacé par un durcisseur poly-imine c'est-à-dire comprenant plusieurs fonctions imines c'est-à-dire aldimine et/ou kétimine. En effet, les compositions munies d'une résine renforçante à base de résine époxyde et d'un durcisseur poly-imine présentent de manière surprenante des propriétés de processabilité améliorées, notamment la sécurité au grillage, tout en conservant des propriétés de rigidité et d'hystérèse similaires à celles des compositions comprenant une résine renforçante de l'art antérieur.

En conséquence, un premier objet de l'invention concerne une composition de caoutchouc à base d'au moins un élastomère diénique, une charge renforçante, un système de réticulation, une résine époxyde, à un taux compris dans un domaine allant de 1 à 20 pce, et un durcisseur poly-imine, à un taux compris dans un domaine allant de 0,2 à 15 pce.

Préférentiellement, l'invention a pour objet une composition de caoutchouc telle que définie ci-dessus, dans laquelle l'élastomère est choisi dans le groupe constitué par le caoutchouc naturel, les polyisoprènes de synthèse, les polybutadiènes, les copolymères de butadiène, les copolymères d'isoprène et les mélanges de ces élastomères.

Préférentiellement également, l'invention a pour objet une composition de caoutchouc telle que définie ci-dessus, dans laquelle le taux de résine époxyde est compris dans un domaine allant de 3 à 20 pce, plus préférentiellement, de 5 à 18 pce.

Plus préférentiellement, l'invention a pour objet une composition de caoutchouc telle que définie ci-dessus, dans laquelle le durcisseur est une poly-imine de formule 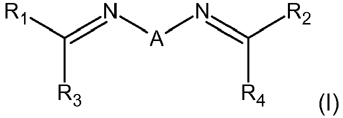 dans laquelle :
- R₁ et R₂ représentent indépendamment des groupements identiques ou différents choisis parmi les groupements alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone; groupements qui peuvent éventuellement être interrompus par des hétéroatomes et/ou substitués,
- R₃ et R₄ représentent indépendamment des groupements identiques ou différents choisis parmi l'hydrogène ou les groupements alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone; groupements qui peuvent éventuellement être interrompus par des hétéroatomes et/ou substitués,
- A représente un groupement hydrocarboné comportant au moins 2 atomes de carbone, éventuellement interrompu par des hétéroatomes et éventuellement substitué.

Encore plus préférentiellement, l'invention a pour objet une composition de caoutchouc telle que définie ci-dessus, dans laquelle R₁ et R₂ représentent indépendamment des groupements identiques ou différents choisis parmi les groupements alkyles ayant de 1 à 12 atomes de carbone, cycloalkyles ayant de 5 à 8 atomes de carbone, aryles ayant de 6 à 24 atomes de carbone ou aralkyles ayant de 7 à 13 atomes de carbone; groupements qui peuvent éventuellement être substitués.

De manière préférentielle, l'invention a pour objet une composition de caoutchouc telle que définie ci-dessus, dans laquelle R₁ et R₂ représentent chacun un radical aryle ayant de 6 à 24 atomes de carbone, et plus préférentiellement encore, un radical phényle éventuellement substitué.

Préférentiellement, l'invention a pour objet une composition de caoutchouc telle que définie ci-dessus, dans laquelle R₃ et R₄ représentent indépendamment des groupements identiques ou différents choisis parmi l'hydrogène ou les groupements alkyles ayant de 1 à 12 atomes de carbone, cycloalkyles ayant de 5 à 8 atomes de carbone, aryles ayant de 6 à 24 atomes de carbone ou aralkyles ayant de 7 à 13 atomes de carbone; groupements qui peuvent éventuellement être substitués.

Plus préférentiellement, l'invention a pour objet une composition de caoutchouc telle que définie ci-dessus, dans laquelle R₃ et R₄ représentent indépendamment un atome d'hydrogène ou un radical aryle ayant de 6 à 24 atomes de carbone.

Préférentiellement également, l'invention a pour objet une composition de caoutchouc telle que définie ci-dessus, dans laquelle R₃ et R₄ représentent indépendamment un hydrogène ou un radical phényle éventuellement substitué.

De préférence, l'invention a pour objet une composition de caoutchouc telle que définie ci-dessus, dans laquelle A représente un groupement hydrocarboné comportant de 2 à 18 atomes de carbone, éventuellement interrompu par des hétéroatomes et éventuellement substitué.

De préférence également, l'invention a pour objet une composition de caoutchouc telle que définie ci-dessus, dans laquelle A représente un groupement alkylène ou cycloalkylène comportant de 2 à 18 atomes de carbone, éventuellement interrompu par des hétéroatomes et éventuellement substitué ; ou un aralkylène comportant de 8 à 18 atomes de carbone, éventuellement interrompu par des hétéroatomes et éventuellement substitué, étant entendu que dans les chaines carbonées alkylènes ou aralkylènes éventuellement interrompues par des hétéroatomes et éventuellement substituées, il peut y avoir des doubles ou triples liaisons entre les atomes de carbone.

Préférentiellement, l'invention a pour objet une composition de caoutchouc telle que définie ci-dessus, dans laquelle A représente un groupement alkylène comportant de 2 à 12 atomes de carbone, plus préférentiellement de 2 à 8 atomes de carbone, ce radical étant éventuellement substitué.

Plus préférentiellement, l'invention a pour objet une composition de caoutchouc telle que définie ci-dessus, dans laquelle au moins un des groupements R₁, R₂, R₃, R₄ et A est substitué par au moins un radical choisi parmi les radicaux alkyle, cycloalkylalkyle, aryle, aralkyle, hydroxyle, alcoxy, amino, carboxy, et carbonyle.

Préférentiellement également, l'invention a pour objet une composition de caoutchouc telle que définie ci-dessus, dans laquelle A est substitué par une ou plusieurs entités imines de formule (II) et/ou par un ou plusieurs radicaux choisi parmi les radicaux alkyle, cycloalkyle, cycloalkylalkyle, aralkyle, eux-mêmes substitués par une ou plusieurs entités imines de formule (II): 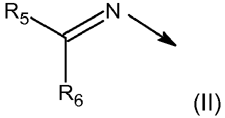 dans lesquelles R₅ est défini comme le sont R₁ et R₂ ci-dessus, R₆ est défini comme le sont R₃ et R₄ ci-dessus, la flèche représentant le point d'attachement du ou des radicaux de formule (II) avec l'atome qui les porte.

De préférence, l'invention a pour objet une composition de caoutchouc telle que définie ci-dessus, dans laquelle le radical A n'est pas substitué.

Plus préférentiellement, l'invention a pour objet une composition de caoutchouc telle que définie ci-dessus, dans laquelle les groupements R₁, R₂, R₃, R₄ et A ne sont pas substitués.

De manière très préférentielle, l'invention a pour objet une composition de caoutchouc telle que définie ci-dessus, dans laquelle le durcisseur est une poly-aldimine.

Préférentiellement également, l'invention a pour objet une composition de caoutchouc telle que définie ci-dessus, dans laquelle le durcisseur est une poly-kétimine.

Encore plus préférentiellement, l'invention a pour objet une composition de caoutchouc telle que définie ci-dessus, dans laquelle le taux de durcisseur est compris dans un domaine allant de 0,5 à 12 pce, et plus préférentiellement, de 2 à 10 pce.

Préférentiellement, l'invention a pour objet une composition de caoutchouc telle que définie ci-dessus, dans laquelle la charge renforçante comporte du noir de carbone, de la silice ou un mélange de noir de carbone et de silice
Plus préférentiellement, l'invention a pour objet une composition de caoutchouc telle que définie ci-dessus, dans laquelle la quantité de charge renforçante est comprise entre 20 et 200 pce.

L'invention concerne également un pneumatique comportant une composition de caoutchouc telle que définie ci-dessus.

L'invention concerne également un article de caoutchouc finis ou semi-finis comportant une composition de caoutchouc tel que défini ci-dessus.

L'invention concerne également un procédé pour préparer une composition de caoutchouc telle que définie ci-dessus, comportant les étapes suivantes :
- incorporer à un élastomère diénique, au cours d'une première étape (dite "non-productive"), une charge renforçante, entre 1 et 20 pce d'une résine époxyde et entre 0,2 et 15 pce d'un durcisseur poly-imine, en malaxant thermomécaniquement le tout jusqu'à atteindre une température maximale comprise entre 110°C et 190°C ;
- refroidir l'ensemble à une température inférieure à 100°C ;
- incorporer ensuite, au cours d'une seconde étape (dite "productive"), un système de réticulation ;
- malaxer le tout jusqu'à une température maximale inférieure à 110°C.

L'invention concerne également un procédé pour préparer une composition de caoutchouc telle que définie ci-dessus, comportant les étapes suivantes :
- incorporer à un élastomère diénique, au cours d'une première étape (dite "non-productive"), une charge renforçante, en malaxant thermomécaniquement le tout jusqu'à atteindre une température maximale comprise entre 110°C et 190°C ;
- refroidir l'ensemble à une température inférieure à 100°C ;
- incorporer ensuite, au cours d'une seconde étape (dite "productive"), un système de réticulation, entre 1 et 20 pce d'une résine époxyde et entre 0,2 et 15 pce d'un durcisseur poly-imine ;
- malaxer le tout jusqu'à une température maximale inférieure à 110°C.

L'invention concerne également un procédé pour préparer une composition de caoutchouc telle que définie ci-dessus, comportant les étapes suivantes :
- incorporer à un élastomère diénique, au cours d'une première étape (dite "non-productive"), une charge renforçante, et entre 1 et 20 pce d'une résine époxyde, en malaxant thermomécaniquement le tout jusqu'à atteindre une température maximale comprise entre 110°C et 190°C ;
- refroidir l'ensemble à une température inférieure à 100°C ;
- incorporer ensuite, au cours d'une seconde étape (dite "productive"), un système de réticulation, et entre 0,2 et 15 pce d'un durcisseur poly-imine ;
- malaxer le tout jusqu'à une température maximale inférieure à 110°C.

L'invention concerne également un procédé pour préparer une composition de caoutchouc telle que définie ci-dessus, comportant les étapes suivantes :
- incorporer à un élastomère diénique, au cours d'une première étape (dite "non-productive"), une charge renforçante, et entre 0,2 et 15 pce d'un durcisseur poly-imine, en malaxant thermomécaniquement le tout jusqu'à atteindre une température maximale comprise entre 110°C et 190°C ;
- refroidir l'ensemble à une température inférieure à 100°C ;
- incorporer ensuite, au cours d'une seconde étape (dite "productive"), un système de réticulation, et entre 1 et 20 pce d'une résine époxyde ;
- malaxer le tout jusqu'à une température maximale inférieure à 110°C.

L'invention a également pour objet les articles en caoutchouc finis ou semi-finis comportant une composition de caoutchouc conforme à l'invention, et notamment une bande de roulement.

Les pneumatiques conformes à l'invention sont notamment destinés à des véhicules tourisme comme à des véhicules deux roues (moto, vélo), véhicules industriels choisis parmi camionnettes, "Poids-lourd" - i.e., métro, bus, engins de transport routier (camions, tracteurs, remorques), véhicules hors-la-route, engins agricoles ou de génie civil, avions, autres véhicules de transport ou de manutention.

L'invention ainsi que ses avantages seront aisément compris à la lumière de la description et des exemples de réalisation qui suivent.

### I. Tests

Les compositions de caoutchouc sont caractérisées, avant et après cuisson, comme indiqué ci-après.

### 1.1. Temps de grillage (ou temps de fixation)

Les mesures sont effectuées à 115°C, conformément à la norme française NF T 43-005. L'évolution de l'indice consistométrique en fonction du temps permet de déterminer le temps de grillage des compositions de caoutchouc, apprécié conformément à la norme précitée par le paramètre T5 (cas d'un grand rotor), exprimé en minutes, et défini comme étant le temps nécessaire pour obtenir une augmentation de l'indice consistométrique (exprimée en UM) de 5 unités au-dessus de la valeur minimale mesurée pour cet indice.

### 1.2. Viscosité Mooney (ou plasticité Mooney)

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=0,83 Newton.mètre).

### I.3. Propriétés dynamiques

Les propriétés dynamiques G*(10%) et tan(δ)max à 40°C sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99, ou selon les cas à une température différente. On effectue un balayage en amplitude de déformation de 0,1 à 50% (cycle aller), puis de 50% à 1% (cycle retour). Les résultats exploités sont le module complexe de cisaillement dynamique

G* et le facteur de perte tan(δ). Pour le cycle retour, on indique la valeur maximale de tan(δ) observée, noté tan(δ)max, ainsi que le module complexe de cisaillement dynamique G*(10%) à 10% de déformation, à 40°C.

On rappelle que, de manière bien connue de l'homme du métier, la valeur de tan(δ)max à 40°C est représentative de l'hystérèse du matériau donc de la résistance au roulement : plus tan(δ)max à 40°C est faible, plus la résistance au roulement est réduite.

### II. Conditions de réalisation de l'invention

La composition de caoutchouc selon l'invention est à base d'au moins un élastomère diénique, une charge renforçante, un système de réticulation, une résine époxyde, à un taux compris dans un domaine allant de 1 à 20 pce, et un durcisseur poly-imine, à un taux compris dans un domaine allant de 0,2 à 15 pce.

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente description, sauf indication expresse différente, tous les pourcentages (%) indiqués sont des pourcentages (%) en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### II.1. Elastomère diénique

La composition de caoutchouc selon l'invention comprend un élastomère diénique.

Par élastomère ou caoutchouc "diénique", doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:
- tout homopolymère obtenu par polymérisation d'un monomère diène conjugué ayant de 4 à 12 atomes de carbone;
- tout copolymère obtenu par copolymérisation d'un ou plusieurs diènes conjugués entre eux ou avec un ou plusieurs composés vinyle aromatique ayant de 8 à 20 atomes de carbone;
- un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
- un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre -20°C et - 70°C.

En résumé, l'élastomère diénique de la composition conforme à l'invention est choisi préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Selon un mode de réalisation particulier, l'élastomère diénique est majoritairement (i.e., pour plus de 50 pce) un SBR, qu'il s'agisse d'un SBR préparé en émulsion ("ESBR") ou un SBR préparé en solution ("SSBR"), ou un coupage (mélange) SBR/BR, SBR/NR (ou SBR/IR), BR/NR (ou BR/IR), ou encore SBR/BR/NR (ou SBR/BR/IR). Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

Par "élastomère isoprénique", on entend de manière connue un homopolymère ou un copolymère d'isoprène, en d'autres termes un élastomère diénique choisi dans le groupe constitué par le caoutchouc naturel (NR) qui peut être plastifié ou peptisé, les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Préférentiellement selon l'invention, les élastomères sont choisis parmi les élastomères isopréniques décrits ci-dessus, et plus préférentiellement, la composition selon l'invention comprend à titre majoritaire du caoutchouc naturel (NR), seul, ou en coupage avec un ou plusieurs autres élastomères diéniques.

Selon un autre mode préférentiel de réalisation de l'invention, la composition de caoutchouc comprend un coupage d'un (un ou plusieurs) élastomère diénique dit "à haute Tg" présentant une Tg comprise entre - 70°C et 0°C et d'un (un ou plusieurs) élastomère diénique dit "à basse Tg" comprise entre -110°C et -80°C, plus préférentiellement entre - 105°C et -90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70%; il consiste de préférence en un polybutadiène (BR) présentant un taux (% molaire) d'enchaînements cis-1,4 supérieur à 90%.

Selon un autre mode particulier de réalisation de l'invention, la composition de caoutchouc comprend par exemple de 30 à 100 pce, en particulier de 50 à 100 pce, d'un élastomère à haute Tg en coupage avec 0 à 70 pce, en particulier de 0 à 50 pce, d'un élastomère à basse Tg ; selon un autre exemple, elle comporte pour la totalité des 100 pce un ou plusieurs SBR préparé(s) en solution.

Selon un autre mode particulier de réalisation de l'invention, l'élastomère diénique de la composition selon l'invention comprend un coupage d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

Les compositions de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

### II.2. Charge renforçante

On peut utiliser tout type de charge renforçante connue pour ses capacités à renforcer une composition de caoutchouc utilisable pour la fabrication de pneumatiques, par exemple une charge organique tel que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115,

N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu dans la présente demande, par définition, toute charge inorganique ou minérale (quelles que soient sa couleur et son origine naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

La charge inorganique renforçante utilisée, en particulier s'il s'agit de silice, a de préférence une surface BET comprise entre 45 et 400 m2/g, plus préférentiellement comprise entre 60 et 300 m2/g.

De manière préférentielle, le taux de charge renforçante totale (noir de carbone et/ou charge inorganique renforçante telle que silice) est compris entre 20 et 200 pce, plus préférentiellement entre 30 et 150 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation préférentiel de l'invention, on utilise une charge renforçante comportant entre 30 et 150 pce, plus préférentiellement entre 50 et 120 pce de charge organique, particulièrement de noir de carbone, et optionnellement de la silice; la silice, lorsqu'elle est présente, est utilisée de préférence à un taux inférieur à 20 pce, plus préférentiellement inférieur à 10 pce (par exemple entre 0,1 et 10 pce). Ce mode de réalisation préférentiel est particulièrement préféré lorsque l'élastomère majoritaire de la composition est un caoutchouc isoprénique, plus particulièrement du caoutchouc naturel.

Alternativement, selon un autre mode de réalisation préférentiel de l'invention, on utilise une charge renforçante comportant entre 30 et 150 pce, plus préférentiellement entre 50 et 120 pce de charge inorganique, particulièrement de silice, et optionnellement du noir de carbone ; le noir de carbone, lorsqu'il est présent, est utilisé de préférence à un taux inférieur à 20 pce, plus préférentiellement inférieur à 10 pce (par exemple entre 0,1 et 10 pce). Ce mode de réalisation préférentiel est particulièrement préféré lorsque la composition de caoutchouc comprend un coupage d'un (un ou plusieurs) élastomère diénique dit "à haute Tg" présentant une Tg comprise entre -70°C et 0°C et d'un (un ou plusieurs) élastomère diénique dit "à basse Tg" comprise entre -110°C et -80°C.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (I) suivante:

(I) Z - A - Sx - A - Z ,

dans laquelle:
- x est un entier de 2 à 8 (de préférence de 2 à 5) ;
- A est un radical hydrocarboné divalent (de préférence des groupements alkylène en C1-C18 ou des groupements arylène en C6-C12, plus particulièrement des alkylènes en C1-C10, notamment en C1-C4, en particulier le propylène) ;
- Z répond à l'une des formules ci-après: 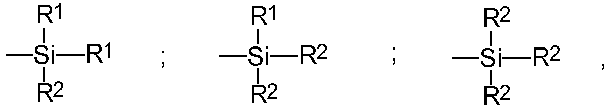 dans lesquelles:
   - les radicaux R1, substitués ou non substitués, identiques ou différents entre eux, représentent un groupe alkyle en C1-C18, cycloalkyle en C5-C18 ou aryle en C6-C18 (de préférence des groupes alkyle en C1-C6, cyclohexyle ou phényle, notamment des groupes alkyle en C1-C4, plus particulièrement le méthyle et/ou l'éthyle).
   - - les radicaux R2, substitués ou non substitués, identiques ou différents entre eux, représentent un groupe alkoxyle en C1-C18 ou cycloalkoxyle en C5-C18 (de préférence un groupe choisi parmi alkoxyles en C1-C8 et cycloalkoxyles en C5-C8, plus préférentiellement encore un groupe choisi parmi alkoxyles en C1-C4, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C1-C4)-alkyl(C1-C4)silyl-alkyl(C1-C4)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C2H5O)3Si(CH2)3S2]2 ou le disulfure de bis-(triéthoxysilylpropyle), en abrégé TESPD, de formule [(C2H5O)3Si(CH2)3S]2. On citera également à titre d'exemples préférentiels les polysulfures (notamment disulfures, trisulfures ou tétrasulfures) de bis-(monoalkoxyl(C1-C4)-dialkyl(C1-C4)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R2 = OH dans la formule I ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc conformes à l'invention, la teneur en agent de couplage est préférentiellement comprise entre 4 et 12 pce, plus préférentiellement entre 4 et 8 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### II.3. Résine époxyde

Les résines époxydes qui sont utilisées dans la présente invention, incluent tous les composés polyépoxydes, comme les composés époxydes aromatiques, les composés époxydes alicycliques, et les composés époxydes aliphatiques. En particulier parmi les composés époxydes aromatiques, sont préférées les résines époxydes novolaques, le 2,2 bis[4-(glycidyloxy) phényl] propane, le poly[o-crésylglycidyl éther)-co-formaldéhyde] et le mélanges de ces composés. On peut citer à titre d'exemple les résines « ECN1273 », « ECN1280 », « ECN1299 » et « ECN 9511 » commercialisées par Huntsman ou les résines « DER 332 », « DER 354 », « DER 383 », « DEN 425 », « DEN 431 », « DEN 438 », « DEN 439 » commercialisées par Dow Chemicals.

La quantité de résine époxyde est comprise dans un domaine allant de 1 à 20 pce; en dessous du minimum indiqué, l'effet technique visé est insuffisant, alors qu'au-delà du maximum indiqué, on s'expose à des risques d'augmentation trop importante de la rigidité et de pénalisation excessive de l'hystérèse. Pour toutes ces raisons, une quantité comprise dans un domaine allant de 3 à 20 pce est préférentiellement choisie, et plus préférentiellement de 5 à 18 pce.

### II.4. Durcisseur

A la résine précédemment décrite est associé un agent durcisseur, apte à la réticuler ou durcir. Selon l'invention, et associé à une résine époxyde, cet agent durcisseur est un composé poly-imine, c'est-à-dire comprenant plusieurs fonctions imines telle qu'aldimines et/ou kétimines. Notamment, il peut s'agir d'un composé poly-aldimine, d'un composé poly-kétimine, d'un composé portant à la fois une ou plusieurs fonctions aldimines et une ou plusieurs fonctions kétimines ou d'un mélange de ces derniers.

La réticulation de la résine est provoquée lors de la cuisson de la matrice de caoutchouc, par formation de liaisons covalentes entre la résine et les fonctions imines du durcisseur.

La quantité de durcisseur est préférentiellement comprise dans un domaine allant de 0,2 à 15 pce ; en dessous du minimum indiqué, l'effet technique visé s'est révélé insuffisant, alors qu'au-delà du maximum indiqué, on s'expose à des risques de pénalisation de la mise en oeuvre à l'état cru des compositions. De préférence, le taux de durcisseur est compris dans un domaine allant de 0,5 à 12 pce et de manière encore plus préférentielle, de 2 à 10 pce.

Les compositions de l'invention utilisent un durcisseur qui peut être une poly-imine. Il peut s'agir de tout composé chimique possédant au moins deux fonctions imines. Ces composés sont facilement identifiés par l'homme du métier.

Les poly-imines incluent notamment et préférentiellement les composés poly-imine de formule générale (I), 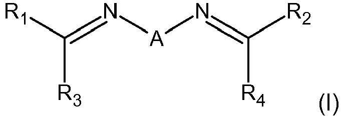 dans laquelle :
- R₁ et R₂ représentent indépendamment des groupements identiques ou différents choisis parmi les groupements alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone; groupements qui peuvent éventuellement être interrompus par des hétéroatomes et/ou substitués,
- R₃ et R₄ représentent indépendamment des groupements identiques ou différents choisis parmi l'hydrogène ou les groupements alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone; groupements qui peuvent éventuellement être interrompus par des hétéroatomes et/ou substitués,
- A représente un groupement hydrocarboné comportant au moins 2 atomes de carbone (de préférence de 2 à 18), éventuellement interrompu par des hétéroatomes et éventuellement substitué.

De manière préférentielle R₁ et R₂ représentent indépendamment des groupements identiques ou différents choisis parmi les groupements alkyles ayant de 1 à 12 atomes de carbone, cycloalkyles ayant de 5 à 8 atomes de carbone, aryles ayant de 6 à 24 atomes de carbone ou aralkyles ayant de 7 à 13 atomes de carbone; groupements qui peuvent éventuellement être substitués. Plus préférentiellement, R₁ et R₂ représentent chacun un radical aryle ayant de 6 à 24 atomes de carbone, et plus préférentiellement encore, un radical phényle éventuellement substitué.

R₃ et R₄ représentent indépendamment des groupements identiques ou différents choisis parmi l'hydrogène ou les groupements alkyles ayant de 1 à 12 atomes de carbone, cycloalkyles ayant de 5 à 8 atomes de carbone, aryles ayant de 6 à 24 atomes de carbone ou aralkyles ayant de 7 à 13 atomes de carbone; groupements qui peuvent éventuellement être substitués. Plus préférentiellement, R₃ et R₄ représentent indépendamment un atome d'hydrogène ou un radical aryle ayant de 6 à 24 atomes de carbone, et plus préférentiellement encore, un hydrogène ou un radical phényle éventuellement substitué.

Préférentiellement également, A représente un groupement hydrocarboné comportant de 2 à 18 atomes de carbone, éventuellement interrompu par des hétéroatomes et éventuellement substitué. Plus préférentiellement, A représente un groupement alkylène ou cycloalkylène comportant de 2 à 18 atomes de carbone, éventuellement interrompu par des hétéroatomes et éventuellement substitué ; ou un aralkylène comportant de 8 à 18 atomes de carbone, éventuellement interrompu par des hétéroatomes et éventuellement substitué, étant entendu que dans les chaines carbonées alkylènes ou aralkylènes éventuellement interrompues par des hétéroatomes et éventuellement substituées, il peut y avoir des doubles ou triples liaisons entre les atomes de carbone. De manière très préférentielle, A représente un groupement alkylène comportant de 2 à 12 atomes de carbone, plus préférentiellement de 2 à 8 atomes de carbone (en particulier 6 atomes de carbone), ce radical étant éventuellement substitué.

Comme indiqué dans les paragraphes précédents, les groupements R₁, R₂, R₃, R₄ et A peuvent être éventuellement interrompus par des hétéroatomes, tels que S, O, ou N, préférentiellement N ou O. Au sens de la présente invention, il faut entendre par groupement interrompu par des hétéroatomes, un groupement qui comprend entre ses atomes d'extrémité (qui sont des atomes de carbone, tels que définis par les définitions des groupements hydrocarbonés en question), un ou plusieurs hétéroatomes tels que proposés précédemment. De manière préférentielle, les groupements R₁, R₂, R₃, R₄ et A ne sont pas interrompus par des hétéroatomes.

Comme indiqué dans les paragraphes précédents, les groupements R₁, R₂, R₃, R₄ et A peuvent être substitués. Les radicaux substituant ces groupements, peuvent être des radicaux courants connus de l'homme du métier tels qu'alkyle (préférentiellement méthyle, tert-butyle ou isopropyle), cycloalkyle (préférentiellement cyclohexyle), cycloalkylalkyle, aryle, aralkyle, hydroxyle, alcoxy, amino, carboxy, ou carbonyle.

Par ailleurs, A peut également être substitué par une ou plusieurs entités imines de formule (II) et/ou par un ou plusieurs radicaux tels que alkyle, cycloalkyle, cycloalkylalkyle, aralkyle, eux-même substitués par une ou plusieurs entités imines de formule (II): 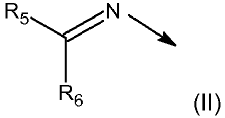 dans lesquelles R₅ est défini comme le sont R₁ et R₂ ci-dessus, R₆ est défini comme le sont R₃ et R₄ ci-dessus, la flèche représentant le point d'attachement du ou des radicaux de formule (II) avec l'atome qui les porte.

Ainsi, les composés de formule (I), comprennent au moins deux entités imines, et peuvent en contenir plus, par exemple, trois ou quatre selon la nature des radicaux substituant du groupement A.

Les entités imines des composés de formule (I) peuvent être des aldimines et/ou des kétimines, selon que R₃, R₄ et R₆ sont des atomes d'hydrogène ou un groupement d'une autre nature tel que défini ci-dessus.

Selon un mode de réalisation préférentiel, les composés de formule (I) comprennent deux entités imines, c'est-à-dire que le groupement A n'est pas substitué par des radicaux comprenant une ou plusieurs entités imines de formule (II) telle que définie ci-dessus.

Selon un autre mode de réalisation préférentiel, les composés de formule (I), comprennent plus de deux entités imines, c'est-à-dire que le groupement A est substitué par un radical comprenant une ou plusieurs entités imines de formule (II) telle que définie ci-dessus.

Plus préférentiellement, ces composés poly-imines sont choisis parmi les composés polyaldimines ou polykétimines présentés ci-après, ou encore parmi les composés suivants :
- N,N'-bis[phenylmethylene]ethane-1,2-diamine,
- N,N'-bis[phenylmethylene]hexane-1,6-diamine,
- N,N'-bis[phenylmethylene]octane-1,8-diamine,
- N,N'-bis[phenylmethylene]cyclohexane-1,4-diamine,
- N,N'-bis[phenylmethylene]cyclohexane-1,2-diamine,
- N,N'-bis[phenylmethylene]-3-[9-(3-aminopropyl)-1,5,7,11-tetraoxaspiro[5.5]undec-3-yl]propan-1-amine,
- N,N'-bis[4-methoxyphenylmethylene]-3-[9-(3-aminopropyl)-1,5,7,11-tetraoxaspiro[5.5]undec-3-yl]propan-1-amine,
- N,N,N-Tris-(2-{[phenylmethylene]amino}ethyl)amine,
- N,N'-bis[(4-diethylaminophenyl)methylene]hexane-1,6-diamine,
- N,N'-bis[mesitylmethylene]hexane-1,6-diamine,
- N,N'-bis[(4-methylphenyl)methylene]hexane-1,6-diamine,
- N,N'-bis[(4-diethylaminophenyl)methylene]octane-1,8-diamine,
- N,N'-bis[mesitylmethylene]octane-1,8-diamine,
- N,N'-bis[(4-methylphenyl)methylene]octane-1,8-diamine,
- N,N'-bis[(4-methoxyphenyl)methylene]hexane-1,6-diamine,
- N,N'-bis[(2-diethylaminophenyl)methylene]hexane-1,6-diamine,
- N,N'-bis[(2-methoxyphenyl)methylene]hexane-1,6-diamine,
- N,N'-bis[(2,4,6-triisopropylphenyl)methylene]hexane-1,6-diamine,
- N,N'-bis[(2,4,6-tri-tert-butylphenyl)methylene]hexane-1,6-diamine,
- N,N'-bis[(2,4,6-tricyclohexylphenyl)methylene]hexane-1,6-diamine,
- N,N'-bis[(2,6-diisopropyl-4-methylphenyl)methylene]hexane-1,6-diamine,
- N,N'-bis[(2,6-di-tert-butyl-4-methylphenyl)methylene]hexane-1,6-diamine,
- N,N'-bis[(2,6-dicyclohexyl-4-methylphenyl)methylene]hexane-1,6-diamine,
- N,N'-bis(phenylmethylene)-1,4-benzenedimethanamine,
- N,N' -Bis(4-methylpentan-2-ylidene)hexane-1,6-diamine,
- N,N'-Bis(2,6-dimethylheptan-4-ylidene)hexane-1,6-diamine,
- N,N'-Bis(2,4-dimethylpentan-3-ylidene)hexane-1,6-diamine,
- N,N'-Bis(4-methylpentan-2-ylidene)octane-1,8-diamine,
- N,N'-Bis(2,6-dimethylheptan-4-ylidene)octane-1,8-diamine,
- N,N'-Bis(2,4-dimethylpentan-3-ylidene)octane-1,8-diamine,
- N,N'-dicyclopentylidenehexane-1,6-diamine,
- N,N'-dicyclopentylideneoctane-1,8-diamine,
- N,N'-dicyclohexylidenehexane-1,6-diamine,
- N,N'-dicyclohexylideneoctane-1,8-diamine,
- N,N'-Bis(4-methylpentan-2-ylidene)cyclohexane-1,4-diamine,
- N,N'-Bis(4-methylpentan-2-ylidene)cyclohexane-1,2-diamine,
- N,N'-Bis(2,6-dimethylheptan-4-ylidene)cyclohexane-1,4-diamine,
- N,N'-Bis(2,6-dimethylheptan-4-ylidene)cyclohexane-1,2-diamine,
- N,N'-dicyclohexylidenecyclohexane-1,4-diamine,
- N,N'-dicyclohexylidenecyclohexane-1,2-diamine,
- N-(4-methylpentan-2-ylidene)-,N',N'-bis((4-methylpentan-2-ylideneamino)ethyl)ethane-1,2-diamine,
- N-(2,6-dimethylheptan-4-ylidene)-N',N'-bis(2-(2,6-dimethylheptan-4-ylideneamino)ethyl)ethane-1,2-diamine.

A titre de composés poly-imines sont utilisés préférentiellement les composés di-imines, tri-imines et tétra-imines. Les composés poly-imines peuvent par exemple être synthétisés en condensant une amine sur un aldéhyde et/ou une cétone. Ce mode de préparation de imines est décrit dans « Advanced Organic Chemistry, Part B : Reactions and Synthesis » par F. A. Carey et R. J. Sundberg, 4th Edition, p 31-33, ainsi que dans « Advanced Organic Chemistry, Reactions, Mechanisms, and Structure » par J. March, 5th Edition, p 1185-1187 et dans les références citées par ces ouvrages.

Par exemple, si l'on considère les di-imines, celles de formule générale (I) peuvent notamment être préparées par la condensation d'une diamine et d'un ou deux composés carbonylés choisis parmi les aldéhydes et les cétones, simultanément ou successivement, selon que la molécule est symétrique ou non symétrique.

Le même type de réaction est applicable à la synthèse de poly-imines, en utilisant les réactifs de départ appropriés par exemple des triamines pour des tri-imines de formule générale (I), des tétramines pour des tétra-imines de formule générale (I), etc.

Concernant les composés de formule générale (I), les poly-amines et les aldéhydes utilisés pour la synthèse de ces produits sont les mêmes que ceux décrits ci-après pour la synthèse de poly-aldimines, et les cétones sont les mêmes que celles utilisées pour la synthèse des poly-kétimines décrites ci-après également.

### II.4.1. Durcisseur poly-aldimine

Dans le cas, préférentiel, où les groupements R₃ et R₄ de la formule (I) ci-dessus sont des atomes d'hydrogène, les compositions de l'invention utilisent un durcisseur qui est une polyaldimine. Dans ce cas il peut s'agir de tout composé chimique possédant au moins deux fonctions aldimines. Ces composés sont facilement identifiés par l'homme du métier.

Les polyaldimines incluent notamment un composé poly-aldimine de formule générale (III), 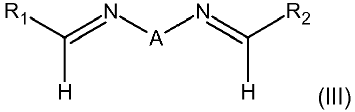 dans laquelle :
- R₁ et R₂ représentent indépendamment des groupements identiques ou différents choisis parmi les groupements alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone; groupements qui peuvent éventuellement être interrompus par des hétéroatomes et/ou substitués,
- A représente un groupement hydrocarboné comportant au moins 2 atomes de carbone (de préférence de 2 à 18), éventuellement interrompu par des hétéroatomes et éventuellement substitué.

De manière préférentielle R₁ et R₂ représentent indépendamment des groupements identiques ou différents choisis parmi les groupements alkyles ayant de 1 à 12 atomes de carbone, cycloalkyles ayant de 5 à 8 atomes de carbone, aryles ayant de 6 à 24 atomes de carbone ou aralkyles ayant de 7 à 13 atomes de carbone; groupements qui peuvent éventuellement être substitués. Plus préférentiellement, R₁ et R₂ représentent chacun un radical aryle ayant de 6 à 24 atomes de carbone, et plus préférentiellement encore, un radical phényle éventuellement substitué.

Préférentiellement également, A représente un groupement hydrocarboné comportant de 2 à 18 atomes de carbone, éventuellement interrompu par des hétéroatomes et éventuellement substitué. Plus préférentiellement, A représente un groupement alkylène ou cycloalkylène comportant de 2 à 18 atomes de carbone, éventuellement interrompu par des hétéroatomes et éventuellement substitué ; ou un aralkylène comportant de 8 à 18 atomes de carbone, éventuellement interrompu par des hétéroatomes et éventuellement substitué, étant entendu que dans les chaines carbonées alkylènes ou aralkylènes éventuellement interrompues par des hétéroatomes et éventuellement substituées, il peut y avoir des doubles ou triples liaisons entre les atomes de carbone. De manière très préférentielle, A représente un groupement alkylène comportant de 2 à 12 atomes de carbone, plus préférentiellement de 2 à 8 atomes de carbone (en particulier 6 atomes de carbone), ce radical étant éventuellement substitué.

Comme indiqué dans les paragraphes précédents, les groupements R₁, R₂, et A peuvent être éventuellement interrompus par des hétéroatomes, tels que S, O, ou N, préférentiellement N ou O. Au sens de la présente invention, il faut entendre par groupement interrompu par des hétéroatomes, un groupement qui comprend entre ses atomes d'extrémité (qui sont des atomes de carbone, tels que définis par les définitions des groupements hydrocarbonés en question), un ou plusieurs hétéroatomes tels que proposés précédemment. De manière préférentielle, les groupements R₁, R₂, et A ne sont pas interrompus par des hétéroatomes.

Comme indiqué dans les paragraphes précédents, les groupements R₁, R₂, et A peuvent être substitués. Les radicaux substituant ces groupements, peuvent être des radicaux courants connus de l'homme du métier tels qu'alkyle (préférentiellement méthyle, tert-butyle ou isopropyle), cycloalkyle (préférentiellement cyclohexyle), cycloalkylalkyle, aryle, aralkyle, hydroxyle, alcoxy, amino, carboxy, ou carbonyle.

Par ailleurs, A peut également être substitué par une ou plusieurs entités aldimines de formule (IV) et/ou par un ou plusieurs radicaux tels que alkyle, cycloalkyle, cycloalkylalkyle, aralkyle, eux-mêmes substitués par une ou plusieurs entités aldimines de formule (IV): 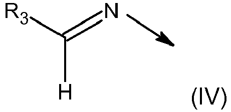 dans lesquelles R₃ est indépendamment défini comme le sont R₁ et R₂ ci-dessus, la flèche représentant le point d'attachement du ou des radicaux de formule (IV) avec l'atome qui les porte.

Ainsi, les composés de formule (III), comprennent au moins deux entités aldimines, et peuvent en contenir plus, par exemple, trois ou quatre selon la nature des radicaux substituant du groupement A.

Selon un mode de réalisation préférentiel, les composés de formule (III) comprennent deux entités aldimines, c'est-à-dire que le groupement A n'est pas substitué par des radicaux comprenant une ou plusieurs entités aldimines de formule (IV) telle que définie ci-dessus.

Selon un autre mode de réalisation préférentiel, les composés de formule (III), comprennent plus de deux entités aldimines, c'est-à-dire que le groupement A est substitué par un radical comprenant une ou plusieurs entités aldimines de formule (IV) telle que définie ci-dessus.

Plus préférentiellement, ces composés poly-aldimines sont choisis parmi les composés suivants :
- N,N'-bis[phenylmethylene]ethane-1,2-diamine,
- N,N'-bis[phenylmethylene]hexane-1,6-diamine,
- N,N'-bis[phenylmethylene]octane-1,8-diamine,
- N,N'-bis[phenylmethylene]cyclohexane-1,4-diamine,
- N,N'-bis[phenylmethylene]cyclohexane-1,2-diamine,
- N,N'-bis[phenylmethylene]-3-[9-(3-aminopropyl)-1,5,7,11-tetraoxaspiro[5.5]undec-3-yl]propan-1-amine,
- N,N'-bis[4-methoxyphenylmethylene]-3-[9-(3-aminopropyl)-1,5,7,11-tetraoxaspiro[5.5]undec-3-yl]propan-1-amine,
- N,N,N-Tris-(2-{[phenylmethylene]amino}ethyl)amine,
- N,N'-bis[(4-diethylaminophenyl)methylene]hexane-1,6-diamine,
- N,N'-bis[mesitylmethylene]hexane-1,6-diamine,
- N,N'-bis[(4-methylphenyl)methylene]hexane-1,6-diamine,
- N,N'-bis[(4-diethylaminophenyl)methylene]octane-1,8-diamine,
- N,N'-bis[mesitylmethylene]octane-1,8-diamine,
- N,N'-bis[(4-methylphenyl)methylene]octane-1,8-diamine,
- N,N'-bis[(4-methoxyphenyl)methylene]hexane-1,6-diamine,
- N,N'-bis[(2-diethylaminophenyl)methylene]hexane-1,6-diamine,
- N,N'-bis[(2-methoxyphenyl)methylene]hexane-1,6-diamine,
- N,N'-bis[(2,4,6-triisopropylphenyl)methylene]hexane-1,6-diamine,
- N,N'-bis[(2,4,6-tri-tert-butylphenyl)methylene]hexane-1,6-diamine,
- N,N'-bis[(2,4,6-tricyclohexylphenyl)methylene]hexane-1,6-diamine,
- N,N'-bis[(2,6-diisopropyl-4-methylphenyl)methylene]hexane-1,6-diamine,
- N,N'-bis[(2,6-di-tert-butyl-4-methylphenyl)methylene]hexane-1,6-diamine,
- N,N'-bis[(2,6-dicyclohexyl-4-methylphenyl)methylene]hexane-1,6-diamine
- N,N'-bis(phenylmethylene)-1,4-benzenedimethanamine

A titre de composés poly-aldimines sont utilisés préférentiellement les composés di-aldimines, tri-aldimines et tétra-aldimines. Ces composés et leur procédé de préparation sont décrits dans l'état de la technique essentiellement soit pour améliorer la résistance à l'abrasion de compositions de caoutchouc destinées à la fabrication de pneumatiques pour véhicules et on peut citer à cet égard la demande de brevet JP2006063206A1, soit pour la préparation de résines selon le procédé décrit dans le brevet US3,668,183.

Les composés poly-aldimines peuvent par exemple être synthétisés en condensant une amine sur un aldéhyde. Ce mode de préparation d'aldimines est décrit dans « Advanced Organic Chemistry, Part B : Reactions and Synthesis » par F. A. Carey et R. J. Sundberg, 4th Edition, p 31-33, ainsi que dans « Advanced Organic Chemistry, Reactions, Mechanisms, and Structure » par J. March, 5th Edition, p 1185-1187 et dans les références citées par ces ouvrages.

Par exemple, si l'on considère les di-aldimines, celles de formule générale (III) peuvent notamment être préparées par la condensation d'une diamine et d'un ou deux aldéhydes, simultanément ou successivement, selon que la molécule est symétrique ou non symétrique.

Le même type de synthèse est applicable à la synthèse de poly-aldimines, en utilisant les réactifs de départ appropriés par exemple des triamines pour des tri-aldimines de formule générale (III), des tétramines pour des tétra-aldimines de formule générale (III), etc.

Concernant les composés de formule générale (III), les amines utilisées pour la synthèse de ces produits sont des composés comprenant au moins deux fonctions aminés. A ce titre, ces composés peuvent être des diamines ou des polyamines tels que des triamines, tétramines, etc.

A titre d'exemple de diamines utiles à la synthèse de di-aldimines pour l'invention, on peut citer, par exemple, éthylenediamine, 1,2-propylènediamine, 3,3'-diméthyl-4,4'-diamino-dicyclohexylmethane, 4,4'-diaminodicyclohexylmethane, isophore diamine, néopentanediamine, (2,2-dimethyl-propane-1,3-diamine), 1,8-octaméthylènediamine, 1,3-diaminopropane, 1,6-hexaméthylènediamine, 1,2-diaminocyclohexane, 1,3-diaminocyclohexane, 1,4-diaminocyclohexane, et préférentiellement 1,8-octaméthylenediamine, 1,6-hexaméthylènediamine, 1,2-diaminocyclohexane, 1,4-diaminocyclohexane, 3-[9-(3-aminopropyl)-1,5,7,11-tetraoxaspiro[5.5]undec-3-yl]propan-1-amine.

On peut aussi citer par exemple, 4,7,10-trioxatridecane-1,13-diamine, 4,9-dioxadodecane-1,12-diamine, N-3-amine-(3-(2-aminoéthylamino)propylamine), diéthylènetriamine, dipropylène triamine, N,N-Bis-(3-aminopropyl)méthylamine, N-4-amine-(N,N'-Bis-(3-aminopropyl)-ethylènediamine), 2,4-diamino-6-méthyl-1,3,5-triazine, 2,4-diamino-6-phényl-s-triazine, mélamine, triéthylènetétramine, tétraéthylènepentamine, 2,2',2"-nitrilotriéthylamine, 3,6-dioxaoctane-1,8-diamine, N,N,N-tris(2-aminoéthyl)amine, bis (3-aminopropyl)tetramethyldisiloxane, 2-(2-aminoéthoxy)éthanamine, 3-{2-[2-(3-aminopropoxy)éthoxy]éthoxy}propan-1-amine, 3-[4-(3-aminopropoxy)phénoxy]propan-1-amine, 3-{2-(3-aminopropoxy)-1-[(3-aminopropoxy)méthyl]éthoxy}propan-1-amine, 2-({2-[(2-aminophényl)thio]ethyl}thio)aniline, 2-[(3-{[(2-aminophényl)thio]méthyl}-2,4,6-trimethylbenzyl)thio]aniline, 2-({4-[(2-aminophényl)thio]but-2-enyl}thio)aniline ; et préférentiellement la N,N-bis(2-aminoethyl)ethane-1,2-diamine.

A titre d'exemple de triamines et de tétramines utiles à la synthèse de tri-aldimines et de tétra-aldimines pour l'invention, on peut citer tris(2-aminoethyl)amine, N,N-bis(2-aminoethyl)-N-{2-[(2-aminoethyl)amino]ethyl}amine, N,N-bis(2-aminoethyl)butane-1,4-diamine, N,N-bis(2-aminoethyl)-N-{2-[bis(2-aminoethyl)amino]ethyl}amine, 2-(aminomethyl)hexane-1,6-diamine, 2,2-bis(aminomethyl)hexane-1,6-diamine, 2,5-bis(aminomethyl)hexane-1,6-diamine, 3,5-diaminocyclohexylamine, 1-[3,5-bis(aminomethyl)phenyl]methanamine.

A titre d'exemple d'aldéhydes utiles à la synthèse de tri-aldimines et de tétra-aldimines pour l'invention, on peut citer benzaldehyde, 4-methoxybenzaldehyde, 4-(diethylamino)benzaldehyde, 4-methylbenzaldehyde, 2-methoxybenzaldehyde,2,4-dimethoxybenzaldehyde, 2,4-dimethylbenzaldehyde, 2,4,6-trimethylbenzaldehyde, 2,6-diisopropyl-4-methylbenzaldehyde, 2,4,6-triisopropylbenzaldehyde, 2,6-di-tert-butyl-4-methylbenzaldehyde, 2,4,6-tri-tert-butylbenzaldehyde, 1-naphthaldehyde, 2,6-dicyclohexyl-4-methylbenzaldehyde, 2,4,6-tricyclohexyl-4-methylbenzaldehyde, 1-naphthaldehyde, 2-naphthaldehyde, 1,1'-biphenyl-2-carbaldehyde, 1H-indole-5-carbaldehyde,5-methylthiophene-2-carbaldehyde, 3,5-dimethyl-1H-pyrrole-2-carbaldehyde, 1-ethyl-1H-pyrrole-2-carbaldehyde, 1H-indole-3-carbaldehyde, quinoline-4-carbaldehyde.

### II.4.2. Durcisseur poly-kétimine

Dans le cas, également préférentiel, où les groupements R₃ et R₄ de la formule (I) ci-dessus ne sont pas des atomes d'hydrogène, les compositions de l'invention utilisent un durcisseur qui est une polykétimine. Dans ce cas il peut s'agir de tout composé chimique possédant au moins deux fonctions kétimines. Ces composés sont facilement identifiés par l'homme du métier.

Les polykétimines incluent notamment et préférentiellement les composés polykétimine de formule générale (V), 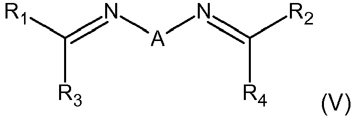 dans laquelle :
- R₁, R₂, R₃ et R₄ représentent indépendamment des groupements identiques ou différents choisis parmi les groupements alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone; groupements qui peuvent éventuellement être interrompus par des hétéroatomes et/ou substitués,
- A représente un groupement hydrocarboné comportant au moins 2 atomes de carbone (de préférence de 2 à 18), éventuellement interrompu par des hétéroatomes et éventuellement substitué.

De manière préférentielle R₁, R₂, R₃ et R₄ représentent indépendamment des groupements identiques ou différents choisis parmi les groupements alkyles ayant de 1 à 12 atomes de carbone, cycloalkyles ayant de 5 à 8 atomes de carbone, aryles ayant de 6 à 24 atomes de carbone ou aralkyles ayant de 7 à 13 atomes de carbone; groupements qui peuvent éventuellement être substitués. Plus préférentiellement, R₁, R₂, R₃ et R₄ représentent chacun un radical aryle ayant de 6 à 24 atomes de carbone, et plus préférentiellement encore, un radical phényle éventuellement substitué.

Préférentiellement également, A représente un groupement hydrocarboné comportant de 2 à 18 atomes de carbone, éventuellement interrompu par des hétéroatomes et éventuellement substitué. Plus préférentiellement, A représente un groupement alkylène ou cycloalkylène comportant de 2 à 18 atomes de carbone, éventuellement interrompu par des hétéroatomes et éventuellement substitué ; ou un aralkylène comportant de 8 à 18 atomes de carbone, éventuellement interrompu par des hétéroatomes et éventuellement substitué, étant entendu que dans les chaines carbonées alkylènes ou aralkylènes éventuellement interrompues par des hétéroatomes et éventuellement substituées, il peut y avoir des doubles ou triples liaisons entre les atomes de carbone. De manière très préférentielle, A représente un groupement alkylène comportant de 2 à 12 atomes de carbone, plus préférentiellement de 2 à 8 atomes de carbone (en particulier 6 atomes de carbone), ce radical étant éventuellement substitué.

Comme indiqué dans les paragraphes précédents, les groupements R₁, R₂, R₃, R₄ et A peuvent être éventuellement interrompus par des hétéroatomes, tels que S, O, ou N, préférentiellement N ou O. Au sens de la présente invention, il faut entendre par groupement interrompu par des hétéroatomes, un groupement qui comprend entre ses atomes d'extrémité (qui sont des atomes de carbone, tels que définis par les définitions des groupements hydrocarbonés en question), un ou plusieurs hétéroatomes tels que proposés précédemment. De manière préférentielle, les groupements R₁, R₂, R₃, R₄ et A ne sont pas interrompus par des hétéroatomes.

Comme indiqué dans les paragraphes précédents, les groupements R₁, R₂, R₃, R₄ et A peuvent être substitués. Les radicaux substituant ces groupements, peuvent être des radicaux courants connus de l'homme du métier tels qu'alkyle (préférentiellement méthyle, tert-butyle ou isopropyle), cycloalkyle (préférentiellement cyclohexyle), cycloalkylalkyle, aryle, aralkyle, hydroxyle, alcoxy, amino, carboxy, ou carbonyle.

Par ailleurs, A peut également être substitué par une ou plusieurs entités kétimines de formule (VI) et/ou par un ou plusieurs radicaux tels que alkyle, cycloalkyle, cycloalkylalkyle, aralkyle, eux-même substitués par une ou plusieurs entités kétimines de formule (VI): 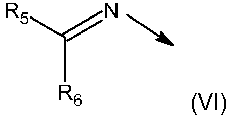 dans lesquelles R₅ et R₆ sont indépendamment définis comme le sont R₁, R₂, R₃ et R₄ ci-dessus, la flèche représentant le point d'attachement du ou des radicaux de formule (VI) avec l'atome qui les porte.

Ainsi, les composés de formule (V), comprennent au moins deux entités kétimines, et peuvent en contenir plus, par exemple, trois ou quatre selon la nature des radicaux substituant du groupement A.

Selon un mode de réalisation préférentiel, les composés de formule (V) comprennent deux entités kétimines, c'est-à-dire que le groupement A n'est pas substitué par des radicaux comprenant une ou plusieurs entités kétimines de formule (VI) telle que définie ci-dessus.

Selon un autre mode de réalisation préférentiel, les composés de formule (V), comprennent plus de deux entités kétimines, c'est-à-dire que le groupement A est substitué par un radical comprenant une ou plusieurs entités kétimines de formule (VI) telle que définie ci-dessus.

Plus préférentiellement, ces composés poly-kétimines sont choisis parmi les composés suivants :
- N,N'-Bis(4-methylpentan-2-ylidene)hexane-1,6-diamine,
- N,N'-Bis(2,6-dimethylheptan-4-ylidene)hexane-1,6-diamine,
- N,N'-Bis(2,4-dimethylpentan-3-ylidene)hexane-1,6-diamine,
- N,N'-Bis(4-methylpentan-2-ylidene)octane-1,8-diamine,
- N,N'-Bis(2,6-dimethylheptan-4-ylidene)octane-1,8-diamine,
- N,N'-Bis(2,4-dimethylpentan-3-ylidene)octane-1,8-diamine,
- N,N'-dicyclopentylidenehexane-1,6-diamine,
- N,N'-dicyclopentylideneoctane-1,8-diamine,
- N,N'-dicyclohexylidenehexane-1,6-diamine,
- N,N'-dicyclohexylideneoctane-1,8-diamine,
- N,N'-Bis(4-methylpentan-2-ylidene)cyclohexane-1,4-diamine,
- N,N'-Bis(4-methylpentan-2-ylidene)cyclohexane-1,2-diamine,
- N,N'-Bis(2,6-dimethylheptan-4-ylidene)cyclohexane-1,4-diamine,
- N,N'-Bis(2,6-dimethylheptan-4-ylidene)cyclohexane-1,2-diamine,
- N,N'-dicyclohexylidenecyclohexane-1,4-diamine,
- N,N'-dicyclohexylidenecyclohexane-1,2-diamine,
- N-(4-methylpentan-2-ylidene)-,N',N'-bis((4-methylpentan-2-ylideneamino)ethyl)ethane-1,2-diamine,
- N-(2,6-dimethylheptan-4-ylidene)-N',N'-bis(2-(2,6-dimethylheptan-4-ylideneamino)ethyl)ethane-1,2-diamine.

A titre de composés poly-kétimines sont utilisés préférentiellement les composés di-kétimines, tri-kétimines et tétra-kétimines. Les composés poly-kétimines peuvent par exemple être synthétisés en condensant une amine sur une cétone. Ce mode de préparation de kétimines est décrit dans « Advanced Organic Chemistry, Part B : Reactions and Synthesis » par F. A. Carey et R. J. Sundberg, 4th Edition, p 31-33, ainsi que dans « Advanced Organic Chemistry, Reactions, Mechanisms, and Structure » par J. March, 5th Edition, p 1185-1187 et dans les références citées par ces ouvrages.

Par exemple, si l'on considère les di-kétimines, celles de formule générale (IV) peuvent notamment être préparées par la condensation d'une diamine et d'une ou deux cétones, simultanément ou successivement, selon que la molécule est symétrique ou non symétrique.

Le même type de réaction est applicable à la synthèse de poly-kétimines, en utilisant les réactifs de départ appropriés par exemple des triamines pour des tri-kétimines de formule générale (V), des tétramines pour des tétra-kétimines de formule générale (V), etc.

Concernant les composés de formule générale (V), les polyamines utilisées pour la synthèse de ces produits sont les mêmes que celles décrites plus haut pour la synthèse de poly-aldimines.

A titre d'exemple de cétones utiles à la synthèse de polykétimines pour l'invention, on peut citer pentan-3-one, 2,2,6,6-tetraméthylcyclohexanone, 2,2,4,4-tétraméthyl-3-pentanone, 4-methylpentan-2-one, 2,4-dimethylpentan-3-one, 2,6-dimethylheptan-4-one, cyclohexanone, acétone, 2,6-diméthylcyclohexanone, 2,2,4,4-tetramethylpentan-3-one, (1,1',3',1")ter(cyclohexan)-2'-one, dicyclohexylmethanone, dicyclopentylmethanone, cyclopentanone, bicyclo[3.3.1]nonan-9-one, dicyclopropylmethanone, 2,6-di-tert-butyl-cyclohexanone, 2,6-diméthylcyclohexanone, 2,4-diméthyl-3-pentanone et préférentiellement 4-methylpentan-2-one, 2,4-dimethylpentan-3-one, 2,6-dimethylheptan-4-one, cyclohexanone, cyclopentanone.

### II.5. Système de réticulation

Le système de réticulation peut être un système de vulcanisation, il est préférentiellement à base de soufre ou de donneurs de soufre et d'accélérateur primaire de vulcanisation (préférentiellement 0,5 à 10,0 pce d'accélérateur primaire). A ce système de vulcanisation viennent optionnellement s'ajouter, divers accélérateurs secondaires ou activateurs de vulcanisation connus tels qu'oxyde de zinc (préférentiellement pour 0,5 à 10,0 pce), acide stéarique, dérivés guanidiques (en particulier diphénylguanidine), ou autres (préférentiellement pour 0,5 à 5,0 pce chacun). Le soufre est utilisé à un taux préférentiel compris entre 0,5 et 10 pce, plus préférentiellement compris entre 0,5 et 5,0 pce, par exemple entre 0,5 et 3,0 pce lorsque l'invention est appliquée à une bande de roulement de pneumatique.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

Selon un mode particulier de réalisation de l'invention, la composition de l'invention est dépourvue de dérivé guanidique ou en contient moins de 0,5 pce. Préférentiellement, la composition est soit totalement dépourvue de tels composés, soit qu'elle en contient moins de 0,45 pce, de préférence moins de 0,4 pce, plus préférentiellement moins de 0,3 pce, de manière préférentielle moins de 0,2 pce et très préférentiellement moins de 0,1 pce. Par « dérivé guanidique » on entend les composés organiques portant comme fonction principale une fonction guanidine, tels que ceux connus dans les compositions de pneumatique notamment comme accélérateurs de vulcanisation, par exemple la diphénylguanidine (DPG) ou la diorthotolylguanidine (DOTG).

Selon un autre mode particulier de réalisation de l'invention, dans le pneumatique selon l'invention, la composition comprenant la résine époxyde nécessaire aux besoins de l'invention est également dépourvue de zinc ou en contient moins de 0,5 pce, préférentiellement moins de 0,3 pce, plus préférentiellement moins de 0,2 pce et très préférentiellement moins de 0,1 pce.

### II.6. Additifs divers

Les compositions de caoutchouc des bandes de roulement conformes à l'invention comportent également tout ou partie des additifs usuels habituellement utilisés dans les compositions d'élastomères destinées à la fabrication de bandes de roulement, comme par exemple des pigments, des agents de protection tels que cires anti-ozone, anti-ozonants chimiques, anti-oxydants, des agents anti-fatigue, des résines renforçantes autres que celles précitées ou des agents plastifiants,. De préférence cet agent plastifiant est une résine hydrocarbonée solide (ou résine plastifiante), une huile d'extension (ou huile plastifiante), ou un mélange des deux.

Ces compositions peuvent également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

### II.7. Préparation des compositions de caoutchouc

Les compositions utilisées dans les bandes de roulement de l'invention, peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
- incorporer à un élastomère diénique, au cours d'une première étape (dite "non-productive"), une charge renforçante, en malaxant thermomécaniquement le tout (par exemple en une ou plusieurs fois), jusqu'à atteindre une température maximale comprise entre 110°C et 190°C ;
- refroidir l'ensemble à une température inférieure à 100°C ;
- incorporer ensuite, au cours d'une seconde étape (dite "productive"), un système de réticulation ;
- malaxer le tout jusqu'à une température maximale inférieure à 110°C.

La résine époxyde et le durcisseur peuvent être incorporés soit durant la phase non-productive, soit durant la phase productive. De préférence, la résine époxyde est incorporée lors de la phase non productive et le durcisseur lors de la phase productive.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (un élastomère diénique, charge renforçante et autres), puis dans un deuxième temps, par exemple après une à deux minutes de malaxage, les autres additifs, éventuels agents de recouvrement de la charge ou de mise en oeuvre complémentaires, à l'exception du système de réticulation. La durée totale du malaxage, dans cette phase non-productive, est de préférence comprise entre 1 et 15 min. Au cours de cette phase, peuvent éventuellement être ajoutés la résine époxyde et le durcisseur, ou seulement la résine époxyde. Si la résine époxyde et le durcisseur ne sont pas ajoutés au cours de cette phase, ils devront l'être au cours de la phase suivante ci-dessous afin que la résine époxyde et le durcisseur nécessaire pour les besoins de l'invention soient présents dans la composition terminée.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min. Au cours de cette phase, peuvent éventuellement être ajoutés la résine époxyde et le durcisseur, ou seulement le durcisseur si la résine époxyde a été ajoutée durant la phase non-productive.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'un pneumatique.

L'invention concerne les pneumatiques et les produits semi-finis pour pneumatiques précédemment décrits, les articles de caoutchouc tant à l'état cru (c'est à dire, avant cuisson) qu'à l'état cuit (c'est à dire, après réticulation ou vulcanisation).

### II.8. Pneumatique de l'invention

La composition de caoutchouc selon l'invention peut être utilisée dans différentes parties du pneumatique, notamment dans le sommet, la zone du bourrelet, la zone du flanc et la bande de roulement (notamment dans la sous-couche de la bande de roulement).

Selon un mode préférentiel de réalisation de l'invention, la composition de caoutchouc précédemment décrite peut être utilisée dans le pneumatique comme une couche élastomère rigide dans au moins une partie du pneumatique.

Par « couche » élastomère, on entend tout élément tridimensionnel, en composition de caoutchouc (ou « élastomère », les deux étant considérés comme synonymes), de forme et d'épaisseur quelconques, notamment feuille, bande, ou autre élément de section droite quelconque, par exemple rectangulaire ou triangulaire.

Tout d'abord, la couche élastomère peut être utilisée en sous couche de bande de roulement disposée dans le sommet du pneumatique, entre d'une part la bande de roulement, i.e., la portion destinée à entrer au contact de la route lors du roulage, et d'autre part la ceinture renforçant ledit sommet. L'épaisseur de cette couche élastomère est de préférence comprise dans un domaine allant de 0,5 à 10 mm, notamment dans un domaine de 1 à 5 mm.

Selon un autre mode préférentiel de réalisation de l'invention, la composition de caoutchouc selon l'invention peut être utilisée pour former une couche élastomère, disposée dans la région de la zone du bourrelet du pneumatique, radialement entre la nappe carcasse, la tringle et le retournement de la nappe carcasse.

Egalement, la composition selon l'invention peut être utilisée dasn les nappes du sommet (ceinture de pneumatique) ou dans la zone entre les extrémités des nappes du sommet et la nappe carcasse.

Un autre mode préférentiel de réalisation de l'invention peut être l'utilisation de la composition selon l'invention pour former une couche élastomère disposée dans la zone du flanc du pneumatique.

Alternativement, la composition de l'invention peut avantageusement être utilisée dans la bande roulement du pneumatique.

### III. EXEMPLES DE REALISATION DE L'INVENTION

### III.1. Préparation des compositions

On procède pour les essais qui suivent de la manière suivante : on introduit dans un mélangeur interne (taux de remplissage final : environ 70% en volume), dont la température initiale de cuve est d'environ 60 °C, successivement l'élastomère diénique, la charge renforçante et la résine époxyde, ainsi que les divers autres ingrédients à l'exception du système de vulcanisation et du durcisseur. On conduit alors un travail thermomécanique (phase non-productive) en une étape, qui dure au total environ 3 à 4 min, jusqu'à atteindre une température maximale de « tombée » de 180°C.

On récupère le mélange ainsi obtenu, on le refroidit puis on incorpore du soufre, un accélérateur type sulfénamide et le durcisseur sur un mélangeur (homo-finisseur) à 30 °C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'un profilé.

### III.2. Essais de compositions de caoutchouc

Cet essai illustre des compositions de caoutchouc qui peuvent être utilisées en particulier en sous-couche, ou en zone basse de pneumatique, zones nécessitant une forte rigidité à basse déformation. Ces compositions présentent une rigidité supérieure à une composition de caoutchouc conventionnelle (comportant une résine phénolique et du HMT à titre de donneur de méthylène), tout en conservant un niveau d'hystérèse similaire et acceptable, par ailleurs, la processabilité, et la sécurité au grillage des compositions de l'invention est nettement améliorée par rapport aux compositions comprenant une résine époxyde et un durcisseur polyamine.

Pour cela, des compositions de caoutchouc ont été préparées comme indiqué précédemment, dont certaines conformes à l'invention (C3, C5, C6 et C10) et certaines non conformes (témoins C1, C2, C4, C7, C8 et C9) (voir tableau 1).

Les compositions C1 à C6 sont des compositions à faible taux de résine renforçante tandis que les compositions C7 à C10 sont des compositions à fort taux de résine renforçante.

Les compositions C1 à C6, représentées ici en pce, comprennent la même quantité molaire de durcisseur (14 mmol). Les variations des taux en pce indiqués dans le tableau 1 sont dues aux différences de masse molaire entre les différents durcisseurs.

Les compositions C7 à C10 sont également représentées en pce. C7 et C8 présentent la même quantité massique de résine renforçante, montrant l'effet du remplacement en masse, cette masse étant diminuée dans la composition C9. La composition C10 selon l'invention comprend les mêmes quantités molaires de résine et de durcisseur que la composition C9.

Les propriétés des compositions C1 à C10 ont été mesurées comme indiqué précédemment et les résultats sont indiqués dans le tableau 2.

**Tableau 1**

| | C1 | C2 | C3 | C4 | C5 | C6 | C7 | C8 | C9 | C10 |
|---|---|---|---|---|---|---|---|---|---|---|
| NR (1) | 100 | 100 | 100 | 100 | 100 | 100 | 100 | 100 | 100 | 100 |
| Noir de carbone (2) | 70 | 70 | 70 | 70 | 70 | 70 | 70 | 70 | 70 | 70 |
| ZnO (3) | 7 | 7 | 7 | 7 | 7 | 7 | 3 | 3 | 3 | 3 |
| Acide stéarique (4) | 0,6 | 0,6 | 0,6 | 0,6 | 0,6 | 0,6 | 2 | 2 | 2 | 2 |
| 6PPD (5) | 1,4 | 1,4 | 1,4 | 1,4 | 1,4 | 1,4 | 2,5 | 2,5 | 2,5 | 2,5 |
| Soufre (6) | 6 | 6 | 6 | 6 | 6 | 6 | 3 | 3 | 3 | 3 |
| Accélérateur (7) | 0,8 | 0,8 | 0,8 | 0,8 | 0,8 | 0,8 | 2 | 2 | 2 | 2 |
| Résine 1 (8) | 6 | | | | | | 12 | | | |
| Résine 2 (9) | | 6 | 6 | 6 | 6 | 6 | | 12 | 12 | 12 |
| Durcisseur 1 (10) | 1,4 | | | | | | 4 | | | |
| Durcisseur 2 (11) | | 2 | | | | | | 4 | 3,1 | |
| Durcisseur 3 (12) | | | 4,6 | | | | | | | |
| Durcisseur 4 (13) | | | | 2 | | | | | | |
| Durcisseur 5 (14) | | | | | 4,6 | | | | | |
| Durcisseur 6 (15) | | | | | | 3,5 | | | | 5,4 |

| | | | | | | | | | | |
|---|---|---|---|---|---|---|---|---|---|---|
| (1) Caoutchouc Naturel ; (2) Noir de carbone N326 (dénomination selon la norme ASTM D-1765) ; (3) Oxyde de zinc (grade industriel - société Umicore) ; (4) Stéarine (« Pristerene 4931 » de la société Uniqema) ; (5) N-1,3-diméthylbutyl-N-phénylparaphénylènediamine (Santoflex 6-PPD de la société Flexsys) ; (6) Soufre insoluble à 80% ; (7) Acc : N-cyclohexyl-2-benzothiazyle sulfénamide (Santocure CBS de la société Flexsys) ou N-tert-butyl-2-benzothiazyle sulfénamide (TBBS). (8) Résine 1 : résine formophénolique novolac (« Peracit 4536K » de la société Perstorp) ; (9) Résine 2 : résine époxyde « DEN 439 » de la société Dow Chemical Co (10) Durcisseur 1 : Hexaméthylènetétramine (de la société Degussa) (11) Durcisseur 2 : p-xylylene diamine (Sigma-Aldrich) MW= 136,2; (12) Durcisseur 3: N,N'-bis(phenylmethylene)-1,4-benzenedimethanamine (CAS 52384-47-1) MW= 312,4; (13) Durcisseur 4 : 1,8-diaminooctane (Sigma-Aldrich) MW= 144,3; (14) Durcisseur 5: N,N'-bis(phenylmethylene)-octane-1,8-diamine (CAS 75190-05-5) MW= 320,5 ; (15) Durcisseur 6 : N,N'-dibenzylidèneéthylènediamine (Sigma-Aldrich) MW= 236,3. | | | | | | | | | | |

**Tableau 2**

| | C1 | C2 | C3 | C4 | C5 | C6 | C7 | C8 | C9 | C10 |
|---|---|---|---|---|---|---|---|---|---|---|
| Fixation 115°C (min) | >30 | | >30 | 6,5 | >30 | 30 | 26 | 0 | | 15 |
| Mooney | 60 | 79 | 54 | >100 | 52 | 53 | 45 | >100 | 65 | 34 |
| G* 10% 40°C | 9,8 | 7,1 | 9,9 | 8,4 | 9,9 | 11,2 | 6,4 | 8,2 | 7,3 | 7,7 |
| Tan d max 40°C | 0,31 | 0,31 | 0,38 | 0,28 | 0,36 | 0,37 | 0,23 | 0,28 | 0,26 | 0,32 |

On note que le remplacement du couple résine formo-phénolique / durcisseur(s) HMT par une résine époxyde et un durcisseur poly-imine dans les compositions de l'invention C3, C5, C6 et C10 permet d'obtenir un module complexe de cisaillement dynamique G*(10 %) à 40°C supérieur à celui de leurs compositions témoins respectives, représentatif d'une augmentation de la rigidité à basse déformation des compositions selon l'invention, tout en limitant l'augmentation du facteur de perte à 40°C (noté tan(δ)max), c'est-à-dire une hystérèse qui reste acceptable, en particulier dans certaines zones du pneumatique,. Par ailleurs, on note dans les compositions de l'invention une nette amélioration de la processabilité des compositions, représentée par des valeurs de Mooney abaissées et/ou des temps de fixation augmentés.

En résumé, les résultats de ces essais démontrent que l'emploi d'une résine époxyde et d'un durcisseur poly-imine dans les compositions de l'invention, permet d'obtenir des compositions de caoutchouc avec une rigidité à basse déformation supérieure à celle d'une composition conventionnelle (ici composition témoin), synonyme d'une amélioration du comportement routier, tout en conservant une hystérèse acceptable, en particulier dans certaines zones du pneumatique, notamment dans la zone basse et dans la sous-couche. Ces compositions ont une très bonne processabilité, au moins aussi bonne que les compositions témoins.

## Revendications

1. Composition de caoutchouc à base d'au moins un élastomère diénique, une charge renforçante, un système de réticulation, une résine époxyde, à un taux compris dans un domaine allant de 1 à 20 pce, et un durcisseur poly-imine, à un taux compris dans un domaine allant de 0,2 à 15 pce.

2. Composition de caoutchouc selon la revendication 1, dans laquelle l'élastomère est choisi dans le groupe constitué par le caoutchouc naturel, les polyisoprènes de synthèse, les polybutadiènes, les copolymères de butadiène, les copolymères d'isoprène et les mélanges de ces élastomères.

3. Composition de caoutchouc selon l'une quelconque des revendications 1 ou 2, dans laquelle le taux de résine époxyde est compris dans un domaine allant de 3 à 20 pce, de préférence de 5 à 18 pce.

4. Composition de caoutchouc selon l'une quelconque des revendications 1 à 3, dans laquelle le durcisseur est une poly-imine de formule 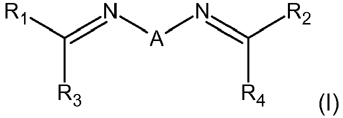 dans laquelle :
- R₁ et R₂ représentent indépendamment des groupements identiques ou différents choisis parmi les groupements alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone; groupements qui peuvent éventuellement être interrompus par des hétéroatomes et/ou substitués,
- R₃ et R₄ représentent indépendamment des groupements identiques ou différents choisis parmi l'hydrogène ou les groupements alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone; groupements qui peuvent éventuellement être interrompus par des hétéroatomes et/ou substitués,
- A représente un groupement hydrocarboné comportant au moins 2 atomes de carbone, éventuellement interrompu par des hétéroatomes et éventuellement substitué.

5. Composition de caoutchouc selon la revendication 4, dans laquelle R₁ et R₂ représentent indépendamment des groupements identiques ou différents choisis parmi les groupements alkyles ayant de 1 à 12 atomes de carbone, cycloalkyles ayant de 5 à 8 atomes de carbone, aryles ayant de 6 à 24 atomes de carbone ou aralkyles ayant de 7 à 13 atomes de carbone; groupements qui peuvent éventuellement être substitués.

6. Composition de caoutchouc selon l'une des revendications 4 ou 5, dans laquelle R₃ et R₄ représentent indépendamment des groupements identiques ou différents choisis parmi l'hydrogène ou les groupements alkyles ayant de 1 à 12 atomes de carbone, cycloalkyles ayant de 5 à 8 atomes de carbone, aryles ayant de 6 à 24 atomes de carbone ou aralkyles ayant de 7 à 13 atomes de carbone; groupements qui peuvent éventuellement être substitués.

7. Composition de caoutchouc selon l'une des revendications 4 à 6, dans laquelle A représente un groupement hydrocarboné comportant de 2 à 18 atomes de carbone, éventuellement interrompu par des hétéroatomes et éventuellement substitué.

8. Composition selon l'une quelconque des revendications 4 à 7, dans laquelle A est substitué par une ou plusieurs entités imines de formule (II) et/ou par un ou plusieurs radicaux choisi parmi les radicaux alkyle, cycloalkyle, cycloalkylalkyle, aralkyle, eux-même substitués par une ou plusieurs entités imines de formule (II): 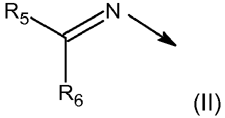 dans lesquelles R₅ est défini comme le sont R₁ et R₂ ci-dessus, R₆ est défini comme le sont R₃ et R₄ ci-dessus, la flèche représentant le point d'attachement du ou des radicaux de formule (II) avec l'atome qui les porte.

9. Composition selon l'une quelconque des revendications 4 à 7, dans laquelle le radical A n'est pas substitué.

10. Composition de caoutchouc selon l'une quelconque des revendications 1 à 9, dans laquelle le durcisseur est une poly-aldimine.

11. Composition de caoutchouc selon l'une quelconque des revendications 1 à 9, dans laquelle le durcisseur est une poly-kétimine.

12. Composition de caoutchouc selon l'une quelconque des revendications de 1 à 11, dans laquelle le taux de durcisseur est compris dans un domaine allant de 0,5 à 12 pce, de préférence de 2 à 10 pce.

13. Composition de caoutchouc selon l'une quelconque des revendications 1 à 12, dans laquelle la charge renforçante comporte du noir de carbone, de la silice ou un mélange de noir de carbone et de silice

14. Composition de caoutchouc selon l'une quelconque des revendications 1 à 13, dans laquelle la quantité de charge renforçante est comprise entre 20 et 200 pce.

15. Pneumatique comportant une composition de caoutchouc selon l'une quelconque des revendications 1 à 14.

## Patentansprüche

1. Kautschukzusammensetzung auf Basis von mindestens einem Dienelastomer, einem verstärkenden Füllstoff, einem Vernetzungssystem, einem Epoxidharz in einem Gehalt in einem Bereich von 1 bis 20 phe und einem Polyimin-Härter in einem Gehalt in einem Bereich von 0,2 bis 15 phe.

2. Kautschukzusammensetzung nach Anspruch 1, wobei das Elastomer aus der Gruppe bestehend aus Naturkautschuk, synthetischen Polyisoprenen, Polybutadienen, Butadien-Copolymeren, Isopren-Copolymeren und Mischungen dieser Elastomere ausgewählt ist.

3. Kautschukzusammensetzung nach einem der Ansprüche 1 und 2, wobei der Gehalt an Epoxidharz in einem Bereich von 3 bis 20 phe, vorzugsweise von 5 bis 18 phe, liegt.

4. Kautschukzusammensetzung nach einem der Ansprüche 1 bis 3, wobei es sich bei dem Härter um ein Polyimin der Formel 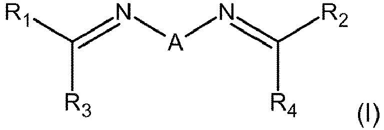 handelt, wobei:
- R₁ und R₂ unabhängig für gleiche oder verschiedene Gruppen stehen, die aus Alkylgruppen mit 1 bis 20 Kohlenstoffatomen, Cycloalkylgruppen mit 5 bis 24 Kohlenstoffatomen, Arylgruppen mit 6 bis 30 Kohlenstoffatomen oder Aralkylgruppen mit 7 bis 25 Kohlenstoffatomen ausgewählt sind, wobei die Gruppen gegebenenfalls durch Heteroatome unterbrochen und/oder substituiert sein können,
- R₃ und R₄ unabhängig für gleiche oder verschiedene Gruppen stehen, die aus Wasserstoff oder Alkylgruppen mit 1 bis 20 Kohlenstoffatomen, Cycloalkylgruppen mit 5 bis 24 Kohlenstoffatomen, Arylgruppen mit 6 bis 30 Kohlenstoffatomen oder Aralkylgruppen mit 7 bis 25 Kohlenstoffatomen ausgewählt sind, wobei die Gruppen gegebenenfalls durch Heteroatome unterbrochen und/oder substituiert sein können,
- A für eine Kohlenwasserstoffgruppe mit mindestens 2 Kohlenstoffatomen, die gegebenenfalls durch Heteroatome unterbrochen und gegebenenfalls substituiert ist, steht.

5. Kautschukzusammensetzung nach Anspruch 4, wobei R₁ und R₂ unabhängig für gleiche oder verschiedene Gruppen stehen, die aus Alkylgruppen mit 1 bis 12 Kohlenstoffatomen, Cycloalkylgruppen mit 5 bis 8 Kohlenstoffatomen, Arylgruppen mit 6 bis 24 Kohlenstoffatomen oder Aralkylgruppen mit 7 bis 13 Kohlenstoffatomen ausgewählt sind, wobei die Gruppen gegebenenfalls substituiert sein können.

6. Kautschukzusammensetzung nach Anspruch 4 oder 5, wobei R₃ und R₄ unabhängig für gleiche oder verschiedene Gruppen stehen, die aus Wasserstoff oder Alkylgruppen mit 1 bis 12 Kohlenstoffatomen, Cycloalkylgruppen mit 5 bis 8 Kohlenstoffatomen, Arylgruppen mit 6 bis 24 Kohlenstoffatomen oder Aralkylgruppen mit 7 bis 13 Kohlenstoffatomen ausgewählt sind, wobei die Gruppen gegebenenfalls substituiert sein können.

7. Kautschukzusammensetzung nach einem der Ansprüche 4 bis 6, wobei A für eine Kohlenwasserstoffgruppe mit 2 bis 18 Kohlenstoffatomen, die gegebenenfalls durch Heteroatome unterbrochen und gegebenenfalls substituiert ist, steht.

8. Kautschukzusammensetzung nach einem der Ansprüche 4 bis 7, wobei A durch eine oder mehrere Imin-Einheiten der Formel (II) und/oder durch einen oder mehrere Reste, die aus Alkyl-, Cycloalkyl-, Cycloalkylalkyl- und Aralkylresten, die selbst durch eine oder mehrere Imin-Einheiten der Formel (II) substituiert sind, ausgewählt sind, substituiert ist: 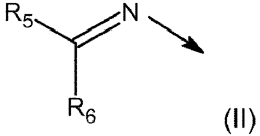 wobei R₅ wie R₁ und R₂ oben definiert ist, R₆ wie R₃ und R₄ oben definiert ist, wobei der Pfeil den Punkt der Verknüpfung des Rests bzw. der Reste der Formel (II) mit dem Atom, das sie trägt, darstellt.

9. Zusammensetzung nach einem der Ansprüche 4 bis 7, wobei der Rest A nicht substituiert ist.

10. Kautschukzusammensetzung nach einem der Ansprüche 1 bis 9, wobei es sich bei dem Härter um ein Polyaldimin handelt.

11. Kautschukzusammensetzung nach einem der Ansprüche 1 bis 9, wobei es sich bei dem Härter um ein Polyketimin handelt.

12. Kautschukzusammensetzung nach einem der Ansprüche 1 bis 11, wobei der Gehalt an Härter in einem Bereich von 0,5 bis 12 phe und vorzugsweise von 2 bis 10 phe liegt.

13. Kautschukzusammensetzung nach einem der Ansprüche 1 bis 12, wobei der verstärkende Füllstoff Ruß, Kieselsäure oder eine Mischung von Ruß und Kieselsäure umfasst.

14. Kautschukzusammensetzung nach einem der Ansprüche 1 bis 13, wobei die Menge an verstärkendem Füllstoff zwischen 20 und 200 phe liegt.

15. Reifen, umfassend eine Kautschukzusammensetzung nach einem der Ansprüche 1 bis 14.

## Claims

1. Rubber composition based on at least one diene elastomer, a reinforcing filler, a crosslinking system, an epoxy resin, at a content within a range extending from 1 to 20 phr, and a polyimine hardener, at a content within a range extending from 0.2 to 15 phr.

2. Rubber composition according to Claim 1, in which the elastomer is selected from the group consisting of natural rubber, synthetic polyisoprenes, polybutadienes, butadiene copolymers, isoprene copolymers and the mixtures of these elastomers.

3. Rubber composition according to either one of Claims 1 and 2, in which the content of epoxy resin is within a range extending from 3 to 20 phr, preferably from 5 to 18 phr.

4. Rubber composition according to any one of Claims 1 to 3, in which the hardener is a polyimine of formula: 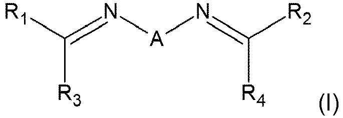 in which:
- R₁ and R₂ independently represent identical or different groups chosen from alkyl groups having from 1 to 20 carbon atoms, cycloalkyl groups having from 5 to 24 carbon atoms, aryl groups having from 6 to 30 carbon atoms or aralkyl groups having from 7 to 25 carbon atoms, which groups can optionally be interrupted by heteroatoms and/or substituted,
- R₃ and R₄ independently represent identical or different groups chosen from hydrogen or alkyl groups having from 1 to 20 carbon atoms, cycloalkyl groups having from 5 to 24 carbon atoms, aryl groups having from 6 to 30 carbon atoms or aralkyl groups having from 7 to 25 carbon atoms, which groups can optionally be interrupted by heteroatoms and/or substituted,
- A represents a hydrocarbon group comprising at least 2 carbon atoms, optionally interrupted by heteroatoms and optionally substituted.

5. Rubber composition according to Claim 4, in which R₁ and R₂ independently represent identical or different groups chosen from alkyl groups having from 1 to 12 carbon atoms, cycloalkyl groups having from 5 to 8 carbon atoms, aryl groups having from 6 to 24 carbon atoms or aralkyl groups having from 7 to 13 carbon atoms, which groups can optionally be substituted.

6. Rubber composition according to one of Claims 4 to 5, in which R₃ and R₄ independently represent identical or different groups chosen from hydrogen or alkyl groups having from 1 to 12 carbon atoms, cycloalkyl groups having from 5 to 8 carbon atoms, aryl groups having from 6 to 24 carbon atoms or aralkyl groups having from 7 to 13 carbon atoms, which groups can optionally be substituted.

7. Rubber composition according to one of Claims 4 to 6, in which A represents a hydrocarbon group comprising from 2 to 18 carbon atoms, optionally interrupted by heteroatoms and optionally substituted.

8. Composition according to any one of Claims 4 to 7, in which A is substituted by one or more imine entities of formula (II) and/or by one or more radicals chosen from alkyl, cycloalkyl, cycloalkylalkyl or aralkyl radicals, themselves substituted by one or more imine entities of formula (II): 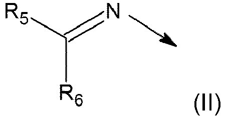 in which R₅ is defined as R₁ and R₂ above are defined and R₆ is defined as R₃ and R₄ above are defined, the arrow representing the point of attachment of the radical or radicals of formula (II) with the atom which bears them.

9. Composition according to any one of Claims 4 to 7, in which the radical A is not substituted.

10. Rubber composition according to any one of Claims 1 to 9, in which the hardener is a polyaldimine.

11. Rubber composition according to any one of Claims 1 to 9, in which the hardener is a polyketimine.

12. Rubber composition according to any one of Claims 1 to 11, in which the content of hardener is within a range extending from 0.5 to 12 phr, preferably within a range extending from 2 to 10 phr.

13. Rubber composition according to any one of Claims 1 to 12, in which the reinforcing filler comprises carbon black, silica or a mixture of carbon black and silica.

14. Rubber composition according to any one of Claims 1 to 13, in which the amount of reinforcing filler is between 20 and 200 phr.

15. Tyre comprising a rubber composition according to any one of Claims 1 to 14.
